# EUROPÄISCHE PATENTSCHRIFT

(11) **EP 2 298 130 B1**
(45) Veröffentlichungstag und Bekanntmachung des Hinweises auf die Patenterteilung: **26.09.2012**
(21) Anmeldenummer: 10013678.7
(22) Anmeldetag: 24.06.2005
(51) Int. Cl.: A47B 88/04, E05C 19/02, E05B 17/00

(54) **Ausstossvorrichtung für ein bewegbares Möbelteil**
Opening device for a mobile furniture item
Poussoir pour un élément de meuble mobile

(30) Priorität: 16.08.2004 AT 13792004
(43) Veröffentlichungstag der Anmeldung: 23.03.2011
(62) Teilanmeldung aus: 05752348.2
(73) Patentinhaber: Julius Blum GmbH, 6973 Höchst (AT)
(72) Erfinder: Gasser, Ingo, 6973 Höchst (AT)
(74) Vertreter: Gangl, Markus

(56) Entgegenhaltungen:
- WO-A1-2004/100718
- DE-U1- 20 308 256

## Beschreibung

Die vorliegende Erfindung betrifft eine Ausstoßvorrichtung für ein in oder an einem Möbelkorpus bewegbar gelagertes Möbelteil, mit den Merkmalen des Oberbegriffs des Anspruchs 1 und ein Möbel mit einer derartigen Ausstoßvorrichtung.

Der Stand der Technik zeigt folgendes:

Die US 6,669,250 B1 betrifft eine Ausstoßvorrichtung für ein in oder an einem Möbelkorpus bewegbar gelagertes Möbelteil (Türe oder Schublade) mit einem schwenkbar gelagerten Hebel, wobei am freien Hebelende eine Laufrolle angeordnet ist.

Die EP 1 314 842 A1 hat eine Ausstoßvorrichtung für ein in oder an einem Möbelkorpus bewegbar gelagertes Möbelteil (Türe oder Schublade) zum Gegenstand mit einem schwenkbar gelagerten Hebel, wobei am freien Hebelende eine Laufrolle angeordnet ist.

Die EP 1 374 732 A1 betrifft eine Ausstoßvorrichtung für ein in einem Möbelkorpus bewegbar gelagertes Möbelteil (Schublade) mit einer elektrischen Antriebseinheit, einer Steuer- bzw. Regeleinrichtung zum Steuern bzw. Regeln der Antriebseinheit und einem Getriebe zur Kraftübertragung von der Antriebseinheit auf den Ausstoßer.

Die DE 29 24 145 A1 betrifft eine Ausstoßvorrichtung für einen in einem Haushaltsbackofen bewegbar gelagerten Backwagen mit einem schwenkbar gelagerten Hebel (Transporthebel) und mit einer elektrischen Antriebseinheit (Elektromotor).

Die US 4,720,154 A beschreibt im Ausführungsbeispiel nach der Fig. 10 eine Ausstoßvorrichtung für eine in einem Möbelkorpus (Geldausgabegerät) bewegbar gelagerte Schublade mit einem schwenkbar gelagerten Hebel und mit einer elektrischen Antriebseinheit (Elektromotor).

Die prioritäts-ältere WO 2004/100718 A1 hat eine Ausstoßvorrichtung für ein in oder an einem Möbelkorpus bewegbar gelagertes Möbelteil (Türe oder Schublade) zum Gegenstand mit einem schwenkbar gelagerten Hebel, mit einer elektrischen Antriebseinheit und einer Steuer- bzw. Regeleinrichtung zum Steuern bzw. Regeln der Antriebseinheit.

Die DE 203 08 256 U1 zeigt eine Ausstoßvorrichtung, welche eine Rutschkupplung aufweist.

Gattungsgemäße Ausstoßvorrichtungen haben das Problem, dass es häufig zu einer Beschädigung des Getriebes in Folge einer missbräuchlichen Benutzung der Ausstoßvorrichtung kommt. Beispielsweise werden ausgestoßene bewegbare Möbelteile vom Benutzer zum Schließen oft mit einer beträchtlichen Kraftentwicklung in Richtung des Möbelkorpus gestoßen. Trifft das bewegbare Möbelteil auf den Ausstoßer der Ausstoßvorrichtung, so überträgt sich diese Kraft auf das Getriebe der Ausstoßvorrichtung, was im schlimmsten Fall zu deren Zerstörung führen kann.

Aufgabe der Erfindung ist es daher, eine gattungsgemäße Ausstoßvorrichtung und ein Möbel zu schaffen, die dieses Problem nicht aufweisen.

Dies wird erfindungsgemäß durch eine Ausstoßvorrichtung mit den Merkmalen des Anspruchs 1 und ein Möbel mit den Merkmalen des Anspruchs 2 erreicht.

Übersteigt die vom Ausstoßer auf das Getriebe übertragene Kraffentwicklung einen durch die konstruktive Ausführung der Rutschkupplung bedingten Grenzwert, so kommt es zu einem Durchrutschen des mit der Rutschkupplung gekoppelten Getriebeteils, was eine Beschädigung des Getriebes verhindert.

Vorteilhafte Ausführungsformen der Erfindung sind in den abhängigen Ansprüchen definiert.

Zur Auslösung der Ausstoßvorrichtung kann die Anordnung einer Wegmesseinrichtung am bzw. im Möbel vorgesehen sein, wobei die Ausstoßvorrichtung durch die Wegmesseinrichtung auslösbar ist.

Um einen möglichst einfachen Einbau in ein erfindungsgemäßes Möbel zu erlauben, ist es besonders vorteilhaft, wenn vorgesehen ist, dass die Wegmesseinrichtung an bzw. in der Ausstoßvorrichtung angeordnet ist.

Es kann aber auch vorgesehen sein, dass die Wegmesseinrichtung am bzw. im Möbelkorpus angeordnet ist.

Eine mögliche Ausführungsform der Erfindung, welche sich durch ihre Einfachheit auszeichnet, sieht vor, dass die Wegmesseinrichtung einen vom bewegbaren Möbelteil beaufschlagbaren Stößel umfasst.

Soll die Ausstoßvorrichtung durch eine vom Benutzer auf das bewegbare Möbelteil aufgebrachte Zugkraft auslösbar sein, so kann vorteilhafterweise vorgesehen sein, dass die Wegmesseinrichtung einen mit dem bewegbaren Möbelteil koppelbaren Mitnehmer aufweist.

Die Wegmesseinrichtung kann sowohl als absolute Messeinrichtung, als auch als inkrementelle Messeinrichtung ausgebildet sein.

Im ersten Fall kann die Wegmesseinrichtung beispielsweise ein Potentiometer umfassen. Im zweiten Fall kann die Wegmesseinrichtung beispielsweise einen Encoder umfassen.

Weitere Vorteile und Einzelheiten der Erfindung ergeben sich anhand der nachfolgenden Figurenbeschreibung. Dabei zeigen:
- Fig. 1 bis 3: Darstellungen eines Ausführungsbeispiels der Erfindung in Draufsicht sowie in perspektivischer Ansicht bei verschiedenen Stellungen des Hebels der Ausstoßvorrichtung,
- Fig. 4 bis 5: ein Ausführungsbeispiel der Erfindung in verschiedenen Ansichten,
- Fig. 6a bis 6d: Ansichten eines Ausführungsbeispiels der Erfindung,
- Fig. 7a bis 7d: ein weiteres Ausführungsbeispiel der Erfindung,
- Fig. 8 bis 9: verschiedene Ansichten eines Ausführungsbeispiels der Erfindung,
- Fig. 10 bis 11: verschiedene Ansichten der Erfindung,
- Fig. 12: die perspektivische Ansicht eines weiteren Ausführungsbeispiels einer erfindungsgemäßen Ausstoßvorrichtung,
- Fig. 13: die in Fig. 12 gezeigte Ausstoßvorrichtung in Explosionsdarstellung,
- Fig. 14: einige Komponenten der in Fig. 13 dargestellten Ausstoßvorrichtung in perspektivischer Ansicht sowie in Explosionsdarstellung,
- Fig. 15a bis 15c: eine Schnittdarstellung eines weiteren Ausführungsbeispiels einer erfindungsgemäßen Ausstoßvorrichtung,
- Fig. 16: eine Explosionsdarstellung der in Fig. 15 dargestellten Ausstoßvorrichtung,
- Fig. 17: eine Explosionsdarstellung eines weiteren Ausführungsbeispiels einer erfindungsgemäßen Ausstoßvorrichtung,
- Fig. 18a bis 18d: ein Ausführungsbeispiel eines erfindungsgemäßen Möbels,
- Fig. 19a bis 19c: ein Ausführungsbeispiel einer Wegmesseinrichtung in zwei perspektivischen Ansichten sowie in einer Explosionsansicht,
- Fig. 20a bis 20c: in perspektivischer Ansicht ein weiteres Ausführungsbeispiel einer erfindungsgemäßen Ausstoßvorrichtung und
- Fig. 21 a bis 21 c: eine Draufsicht auf die in Fig. 20 dargestellte Ausstoßvorrichtung.

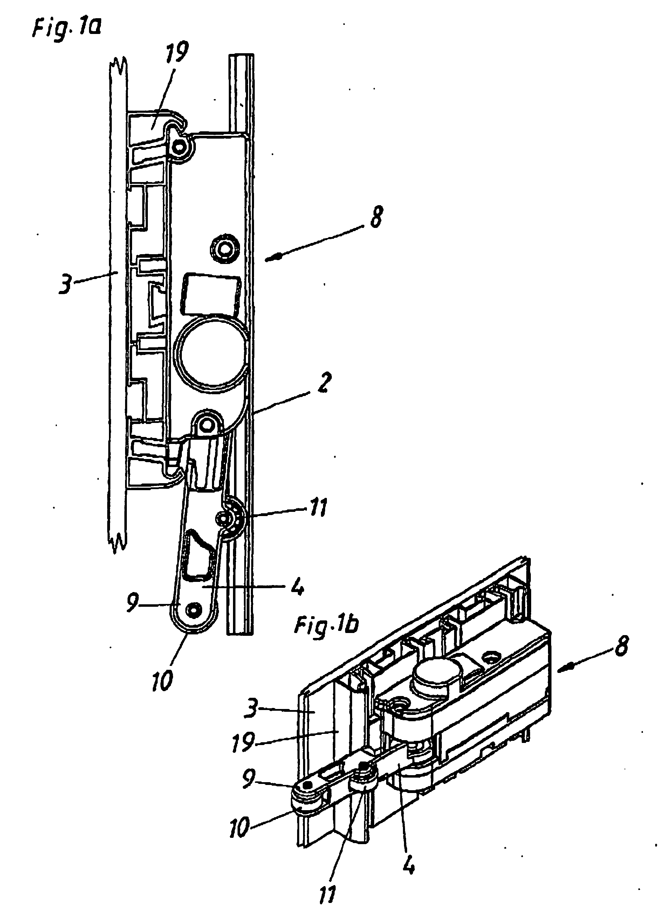

Fig. 1a zeigt in Draufsicht ein Ausführungsbeispiel einer erfindungsgemäßen Ausstoßvorrichtung 8, welche über eine Trägerschiene 19 an einem Möbelkorpus 3 befestigt ist. Die Ausstoßvorrichtung 8 weist dabei einen schwenkbar gelagerten Hebel 4 auf, wobei am freien Hebelende 9 eine erste Laufrolle 10 und zusätzlich auf annähernd halber Strecke zwischen dem Anlenkpunkt des Hebels 4 und dem freien Hebelende 9 eine zweite Laufrolle 11 angeordnet ist. Bei dem in Fig. 1a dargestellten Zustand befindet sich das bewegbare Möbelteil 2, von dem hier nur die Rückblende dargestellt ist, in seiner geschlossenen Endlage im Möbelkorpus 3, wodurch der Hebel 4 mit der zweiten Laufrolle 11 am bewegbaren Möbelteil 2 anliegt.

Fig. 1b zeigt eine perspektivische Ansicht der Ausstoßvorrichtung 8, wobei der besseren Übersichtlichkeit halber das bewegbare Möbelteil 2 nicht dargestellt wurde.

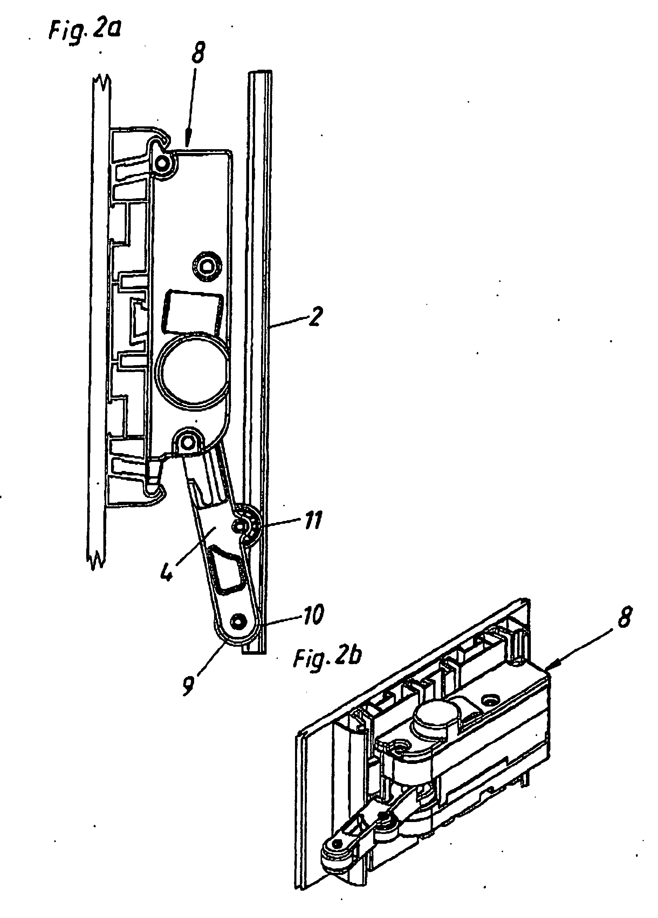

In Fig. 2a wurde das bewegbare Möbelteil 2 durch den Hebel 4 bereits so weit aus seiner geschlossenen Endlage im Möbelkorpus 3 herausbewegt, dass nun auch die am freien Hebelende 9 angeordnete erste Laufrolle 10 mit dem bewegbaren Möbelteil 2 in Kontakt kommt.

Fig. 2b stellt eine perspektivische Ansicht der Ausstoßvorrichtung 8 in diesem Zustand dar.

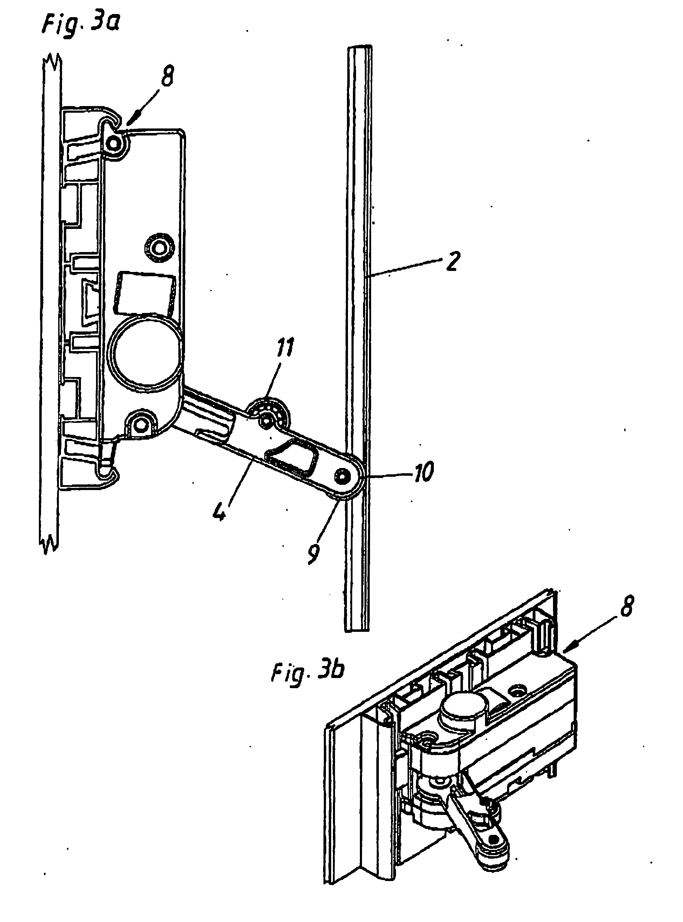

Die Fig. 3a und 3b zeigen die Situation, kurz bevor sich das bewegbare Möbelteil 2 vollständig vom Hebel 4 wegbewegt. Der Hebel 4 ist nunmehr über die am freien Hebelende 9 angeordnete ersten Laufrolle 10 mit dem bewegbaren Möbelteil 2 in Kontakt, während die zweite Laufrolle 11 das bewegbare Möbelteil 2 nicht mehr kontaktiert.

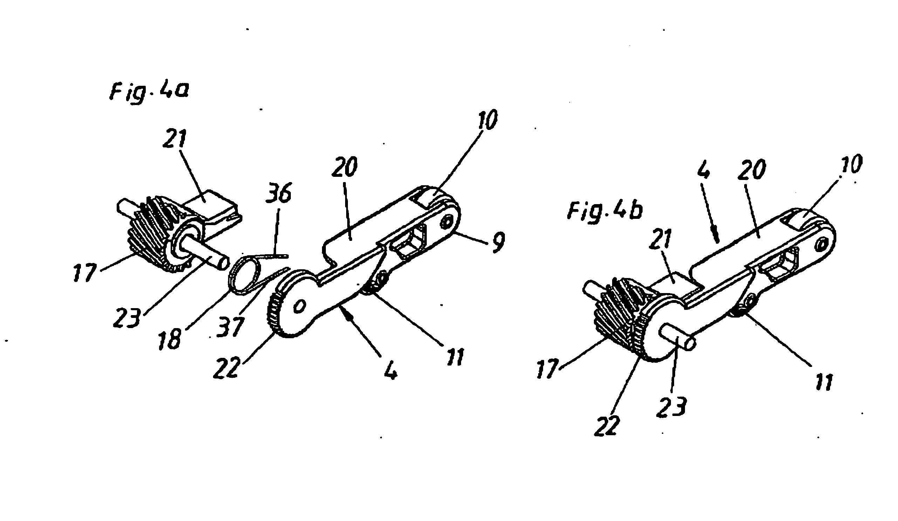

Die Fig. 4a und 4b zeigen einen erfindungsgemäßen Hebel 4, der aus einem ersten Hebelteil 20 und einem zweiten Hebelteil 21 besteht. Der zweite Hebelteil 21 ist einstückig mit dem Abtrieb 17 eines in Fig. 4 nicht dargestellten Getriebes 13 ausgebildet. Am ersten Hebelteil 20 ist am freien Hebelende 9 eine Laufrolle 11 zur Beaufschlagung eines in Fig. 4 nicht dargestellten bewegbaren Möbelteils 2 vorgesehen. Weiters ist annähernd in der Mitte des Hebels 4 eine zweite Laufrolle 10 angeordnet. Zwischen dem ersten Hebelteil 20 und dem zweiten Hebelteil 21 ist eine Feder 18 angeordnet, welche sich mit ihrem einen Federende 36 am zweiten Hebelteil 21 und mit ihrem anderen Federende 37 am ersten Hebelteil 20 abstützt. Dadurch wird das zweite Hebelteil 20 in Bezug auf das erste Hebelteil 21 vorgespannt. In diesem Ausführungsbeispiel ist am ersten Hebelteil 20 ein Antriebsrad 22 für ein in Fig. 4 nicht näher dargestelltes Potentiometer 15 zur Positionsbestimmung des Hebels 4 ausgebildet.

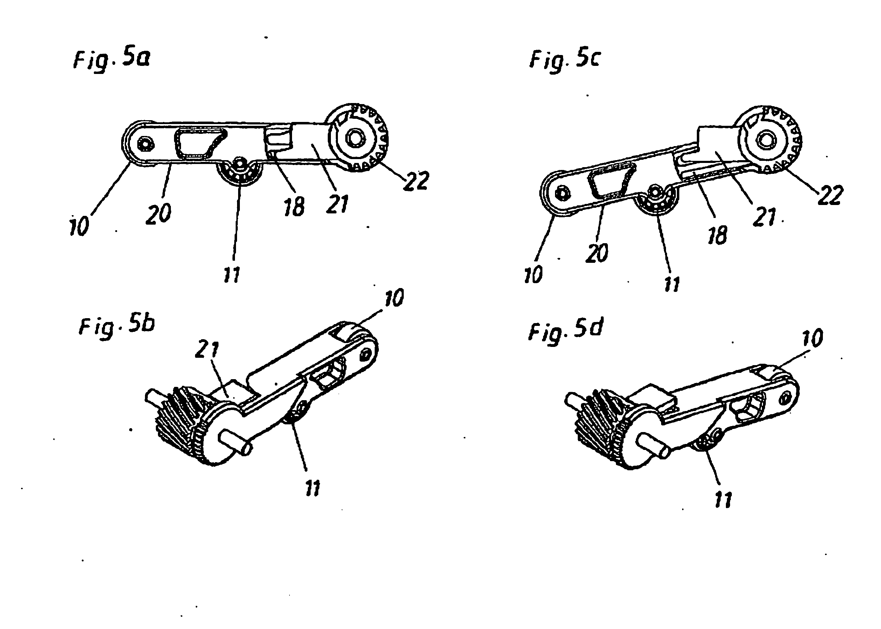

Fig. 5c zeigt die jeweilige Lage des ersten Hebelteils 20 und des zweiten Hebelteils 21, die vorliegen, wenn sich das in Fig. 5 nicht dargestellte bewegbare Möbelteil 2 in seiner geschlossenen Endlage befindet. Die Laufrolle 10 liegt dabei an der Rückblende des bewegbaren Möbelteils 2 an. In Fig. 5a wurde das zweite Hebelteil 21 über den Abtrieb 22 eines in Fig. 5 nicht dargestellten Getriebes 13 angetrieben bewegt, um eine Ausstoßung des bewegbaren Möbelteils 2 zu erzielen. Der zweite Hebelteil 20 liegt dadurch am ersten Hebelteil 21 an. Die Feder 18 unterstützt dabei den Ausstoßvorgang des bewegbaren Möbelteils 2. Die Fig. 5b und 5d zeigen perspektivische Ansichten zu den Fig. 5a und 5c.

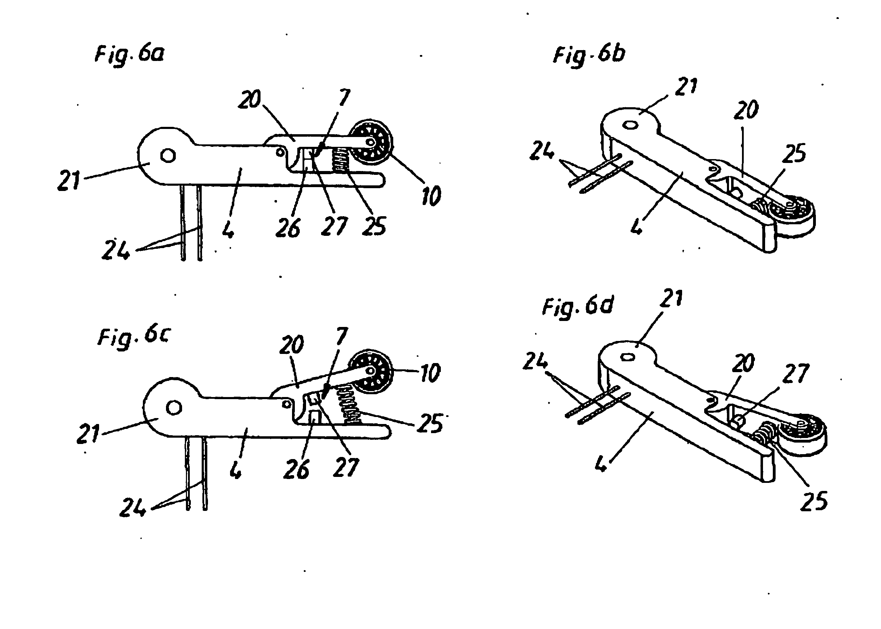

Die Fig. 6a bis 6d zeigen ein erstes Ausführungsbeispiel der dritten Variante der Erfindung, welche sich durch einen im Hebel 4 angeordneten Schalter 7 auszeichnet. Wie in dem vorbesprochenen Ausführungsbeispiel weist der Hebel 4 einen ersten Hebelteil 20 zur Kraftbeaufschlagung eines in Fig. 6 nicht dargestellten bewegbaren Möbelteils 2 und einen zweiten Hebelteil 21, welcher mit einer ebenfalls nicht dargestellten Antriebseinheit 5 in Verbindung steht, auf. Eine Feder 25 ist zwischen den beiden Hebelteilen 20, 21 angeordnet. Am ersten Hebelteil 20 ist eine Laufrolle 10 angeordnet. Der Schalter 7 umfasst einen am ersten Hebelteil 20 angeordneten ersten Kontakt 27 und einen am zweiten Hebelteil 21 angeordneten zweiten Kontakt 26. Bei dem in den Fig. 6c und 6d dargestellten Zustand sind die beiden Kontakte 26, 27 voneinander abgehoben. Dies entspricht der inaktiven Stellung des Schalters 7. Durch einen nicht dargestellten Benutzer wird das ebenfalls nicht dargestellte Möbelteil 2 in Schließrichtung, das heißt in den nicht dargestellten Möbelkorpus 3 hineinbewegt. Dadurch wird der erste Hebelteil 20 gegen die Kraftbeaufschlagung der Feder 25 bewegt. Dadurch kommen die beiden Kontakte 26, 27 in Berührung, was einen der Übersichtlichkeit halber nicht näher dargestellten Stromkreis schließt, wodurch über die Leitungen 24 ein Auslösesignal an die Antriebseinheit 5 weitergegeben wird.

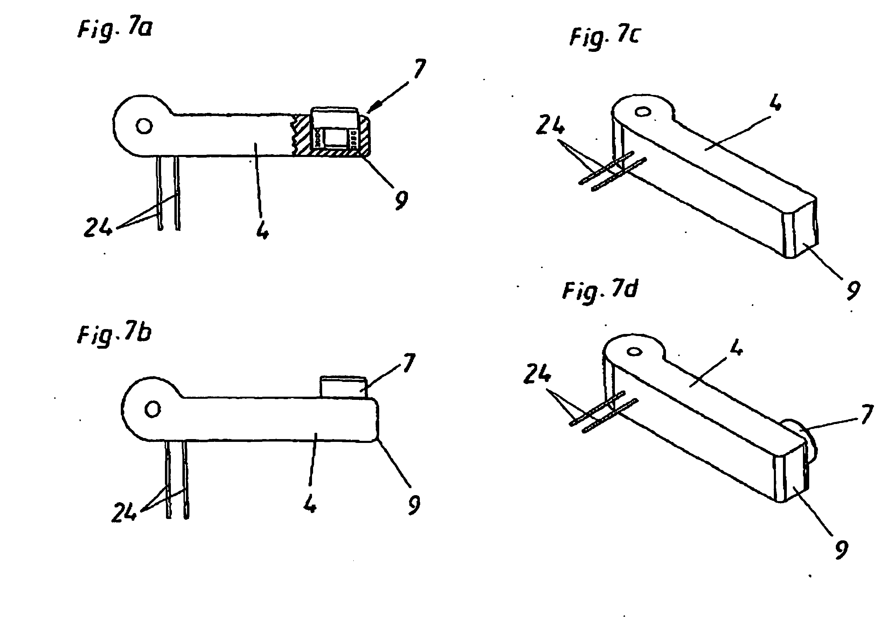

Die Fig. 7a bis 7d zeigen ein zweites Ausführungsbeispiel der dritten Variante der Erfindung, bei dem der Hebel 4 einstückig ausgebildet ist. Der Schalter 7 ist in diesem Ausführungsbeispiel als ein am freien Hebelende 9 angeordneter Druckschalter ausgebildet.

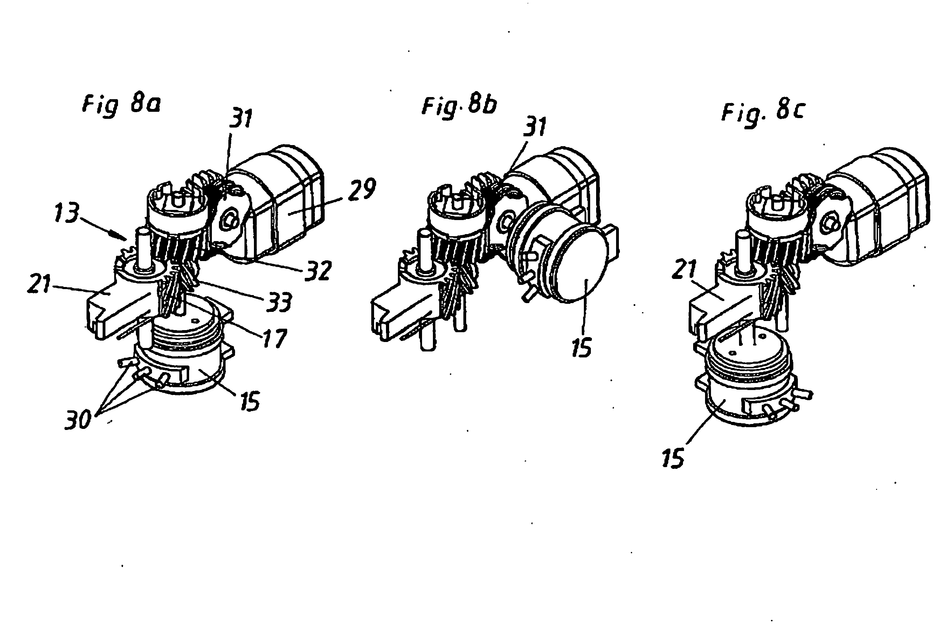

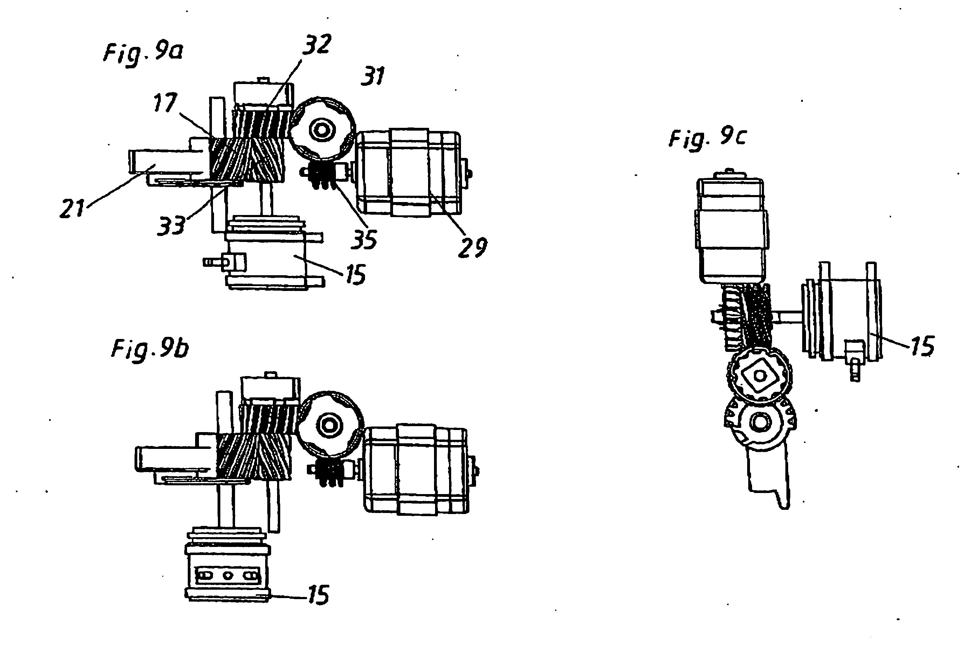

Die Fig. 8a bis 8c zeigen verschiedene Ausführungsbeispiele der vierten Variante der Erfindung. Dargestellt ist ein Getriebe 13, welches zur Kraftübermittlung von dem Elektromotor 29 auf den zweiten Hebelteil 21 dient. Die Kraftübermittlung erfolgt dabei über eine in den Fig. 8 nicht erkennbare Spindel 35 (erkennbar in den Fig. 9a und 9b), das Zahnrad 31, das weitere Zahnrad 33 und schließlich den Abtrieb 17 des Getriebes, der in diesem Ausführungsbeispiel einstückig mit dem zweiten Hebelteil 21 ausgebildet ist. Erfindungsgemäß ist in jeder der Fig. 8a bis 8c ein Potentiometer 15 (hier: Drehpotentiometer) mit dem Getriebe 13 verbunden. Das Potentiometer 15 weist dabei drei Kontakte 30 zum Anschluss bzw. zum Abgreifen von elektrischer Spannung auf. Bei dem in Fig. 8a dargestellten Ausführungsbeispiel ist das Potentiometer 15 über eine gemeinsame Achse mit der mittleren Stufe des Getriebes 13 verbunden. Bei dem in Fig. 8b dargestellten Ausführungsbeispiel ist das Potentiometer 15 mit dem Zahnrad 31 verbunden. Bei dem besonders bevorzugten Ausführungsbeispiel der Fig. 8c ist das Potentiometer 15 mit dem zweiten Hebelteil 21 verbunden.

Die Fig. 9a bis 9c zeigen alternative Ansichten zu den in den Fig. 8a bis 8c dargestellten Ausführungsbeispielen.

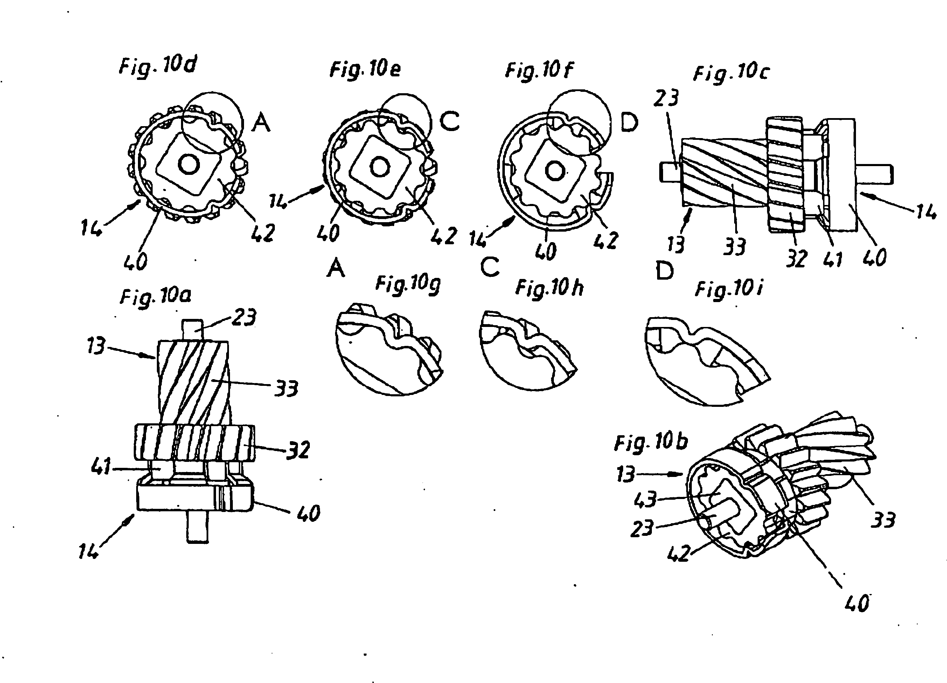

Die Fig. 10a bis 10f zeigen die Erfindung. Fig. 10a zeigt in einer Seitenansicht einen Teil eines Getriebes 13, welches eine Rutschkupplung 14 umfasst. Die Rutschkupplung 14 besteht aus einem Federring 41, welcher sich bei übermäßiger Belastung aufweitet und über die Mitnahmenocken 42 gleitet. Dieser Vorgang ist beispielhaft in den Fig. 10d bis 10f dargestellt. Die Fig. 10g bis 10i zeigen jeweils Detaildarstellungen zu diesem Vorgang. Fig. 10b zeigt eine perspektivische Ansicht des Teils des Getriebes 13.

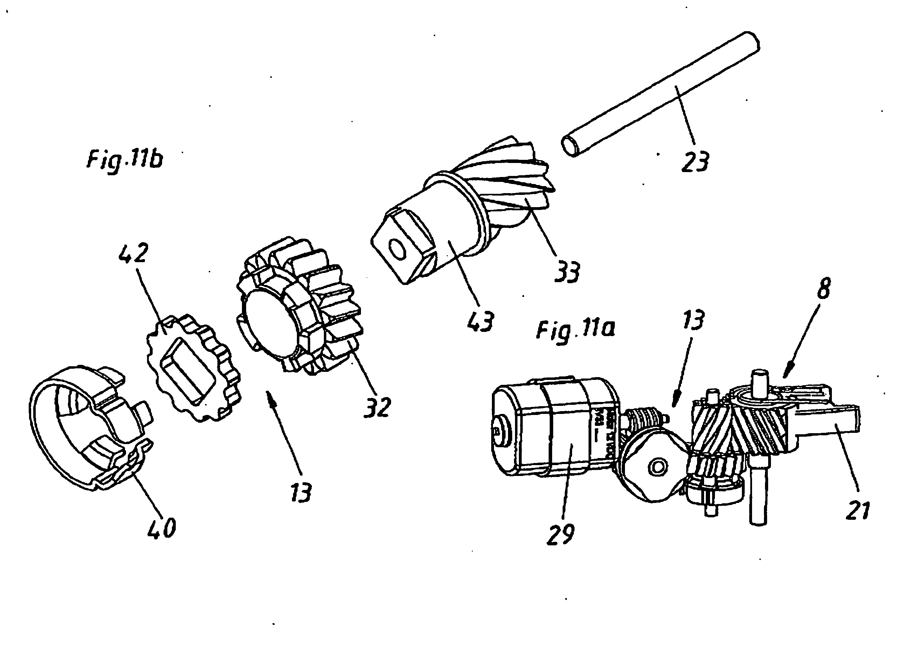

Der Aufbau des in den Fig. 10a bis 10i dargestellten Teils des Getriebes 13 geht insbesondere aus der Explosionsdarstellung der Fig. 11b hervor. Auf einem gemeinsamen Stift 23 sind dabei das Zahnrad 33, das weitere Zahnrad 32, welches drehfest mit dem Federring 40 verbunden ist, und die Mitnahmenocken 42 angeordnet. Die Mitnahmenocken 42 sind formschlüssig auf den als Bolzen 43 ausgebildeten Teil des Zahnrads 33 aufgesteckt. Die Fig. 11a zeigt eine perspektivische Ansicht des vollständigen Getriebes 13, welches von einem Elektromotor 29 angetrieben wird und seinerseits den zweiten Hebelteil 21 antreibt.

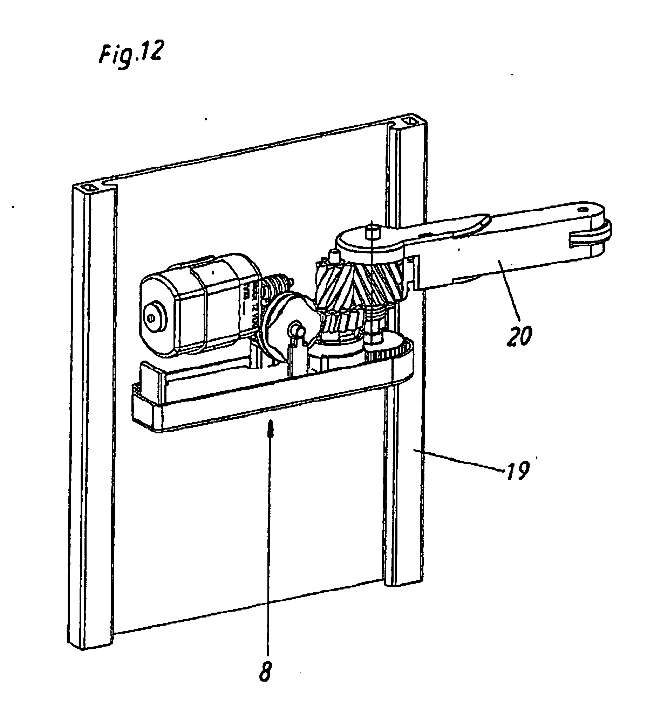

Die Fig. 12 zeigt die in Fig. 11 dargestellte Ausstoßvorrichtung 8 mit dem ersten Hebelteil 20 bei teilweise entferntem Gehäuse in ihrer Befestigung an einer Trägerschiene 19.

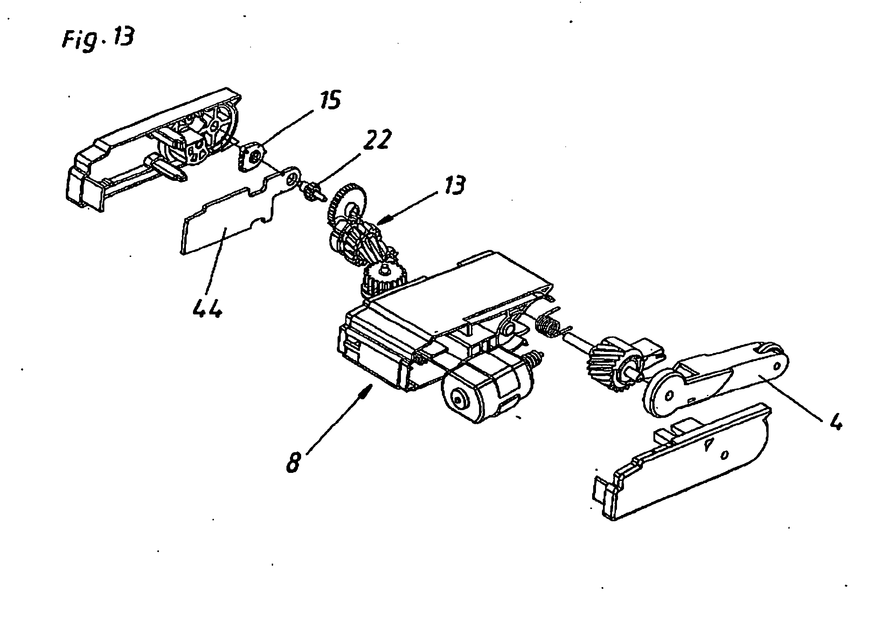

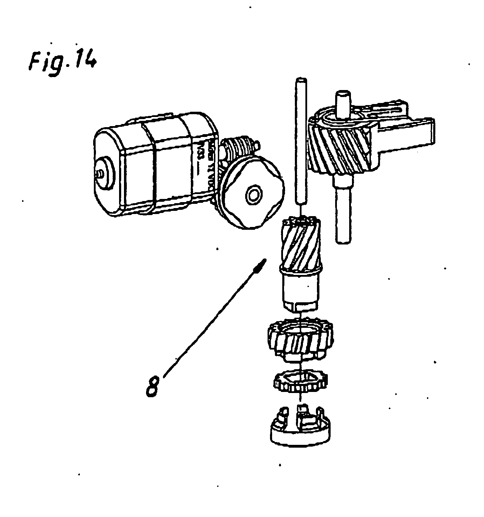

Fig. 13 zeigt eine weitere Explosionsdarstellung der in den Fig. 11a und 12 dargestellten Ausstoßvorrichtung 8, wobei auch das Gehäuse der Ausstoßvorrichtung 8 vollständig erkennbar ist. Weiters ist in Fig. 13 die Anordnung eines Potentiometers 15 direkt auf einer Platine 44, welche alle Schaltkreise der Ausstoßvorrichtung 8 beherbergt, erkennbar. Über den Abtrieb 22 steht das Potentiometer 15 mit dem Getriebe 13 in Verbindung und dient der Positionsmessung des Hebels 4. Fig. 14 zeigt eine weitere Explosionsdarstellung des Antriebsmechanismus der dargestellten Ausstoßvorrichtung 8.

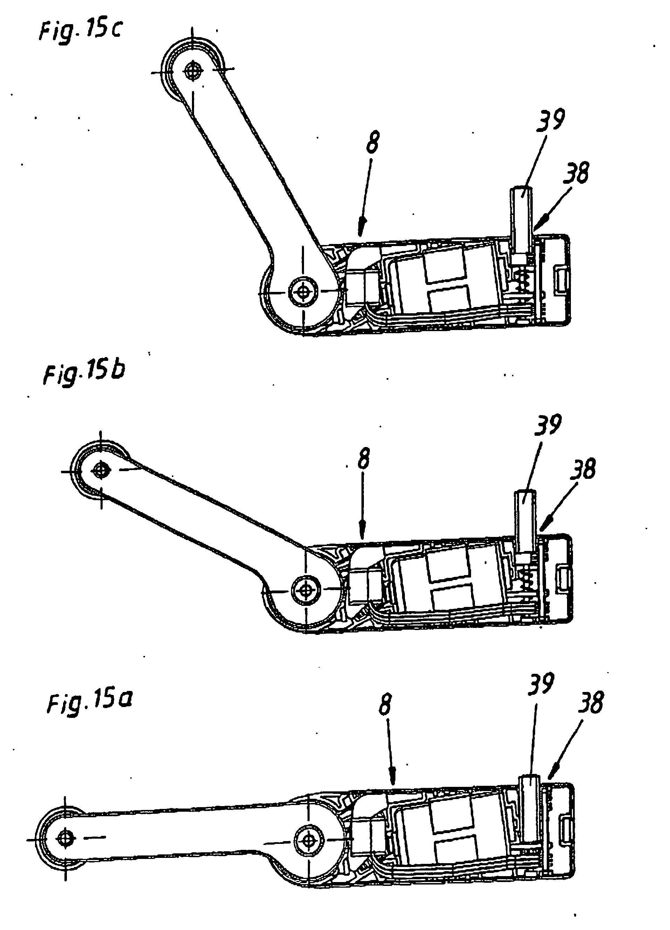

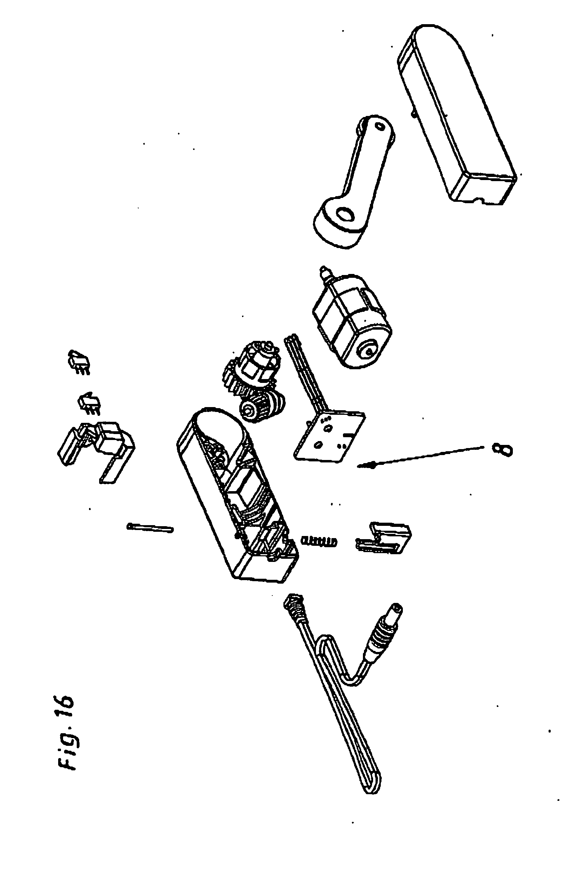

In den Fig. 15a bis 15c ist ein weiteres Ausführungsbeispiel einer erfindungsgemäßen Ausstoßvorrichtung 8 dargestellt, welches sich insbesondere durch die mit dem Bezugszeichen 38 versehene Wegemesseinrichtung auszeichnet. Die Wegmesseinrichtung 38 weist einen von einem nicht dargestellten bewegbaren Möbelteil 2 beaufschlagbaren federbelasteten Stößel 39 auf. In Fig. 15a wurde der Stößel 39 durch das nicht dargestellte bewegbare Möbelteil 2 in das Gehäuse der Ausstoßvorrichtung 8 eingedrückt, was den Ausstoßvorgang auslöst. Diese Ausstoßvorrichtung ist in Fig. 16 in einer Explosionsdarstellung übersichtlich dargestellt.

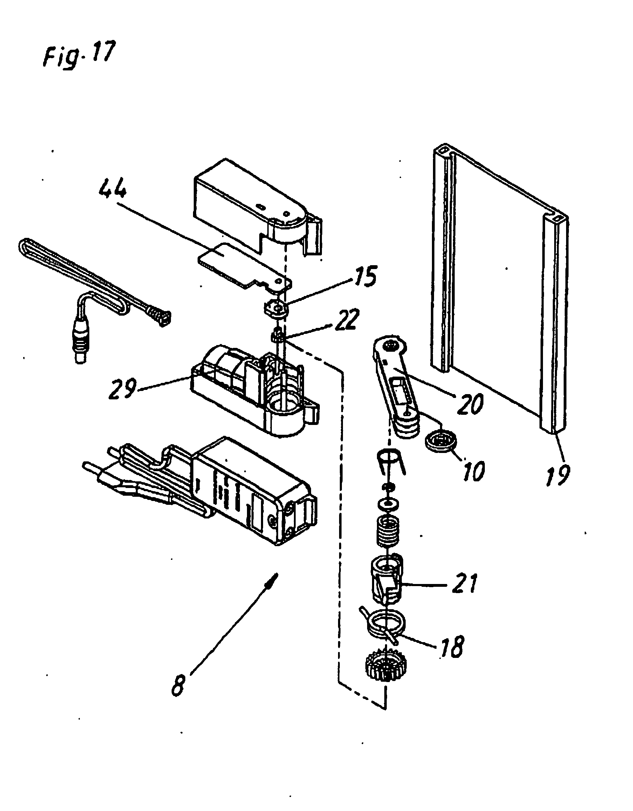

Die Fig. 17 zeigt die Explosionsdarstellung eines weiteren Ausführungsbeispiels einer erfindungsgemäßen Ausstoßvorrichtung 8, welches sich von dem beispielsweise in Fig. 13 dargestellten Ausführungsbeispiel nur dadurch unterscheidet, dass eine Getriebestufe weniger vorgesehen ist.

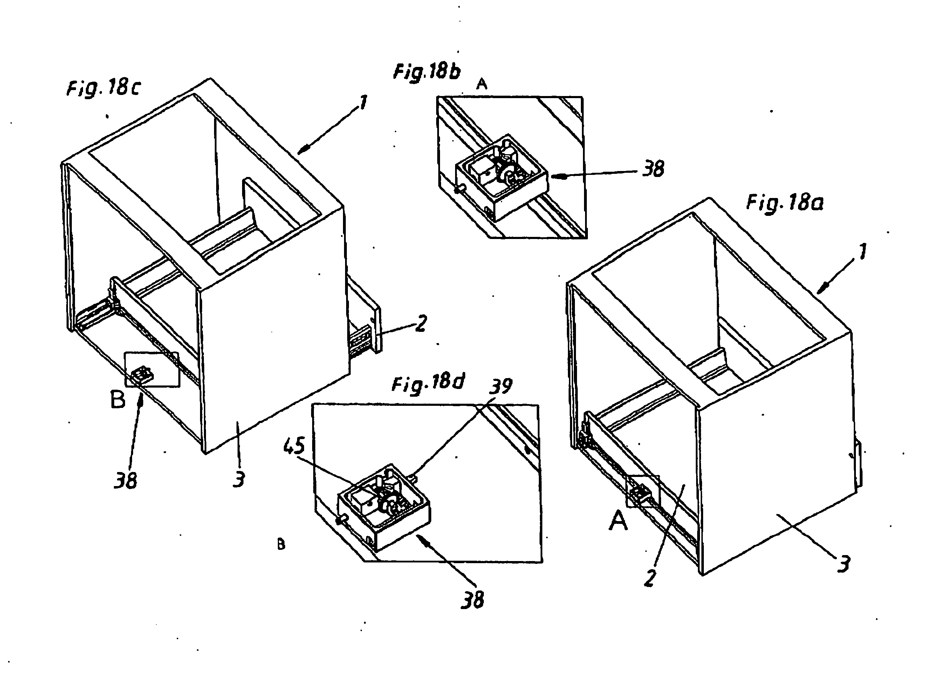

In den Fig. 18a bis 18d ist ein Möbel 1 mit einem als Schublade ausgebildeten bewegbaren Möbelteil 2 dargestellt. Erkennbar ist eine am Möbelkorpus 3 befestigte Wegmesseinrichtung 38, welche einen Encoder 45 umfasst. Ein Stößel 39 ist durch die Rückseite des bewegbaren Möbelteils 2 kraftbeaufschlagbar. In der in Fig. 18a dargestellten Stellung ist das Stößel 39 durch das sich in seiner geschlossenen Endlage befindende bewegbaren Möbelteil 2 eingedrückt. Eine geringfügige Herausbewegung des bewegbaren Möbelteils 2 aus seiner geschlossenen Endlage durch einen Benutzer gestattet die Herausbewegung des federbeaufschlagten Stößels 39, was vom Encoder 45 registriert wird. Die Wegmesseinrichtung 38 erteilt daraufhin einer in Fig. 18 nicht dargestellten Ausstoßvorrichtung 8 den Befehl zum Ausstoßen des bewegbaren Möbelteils 2.

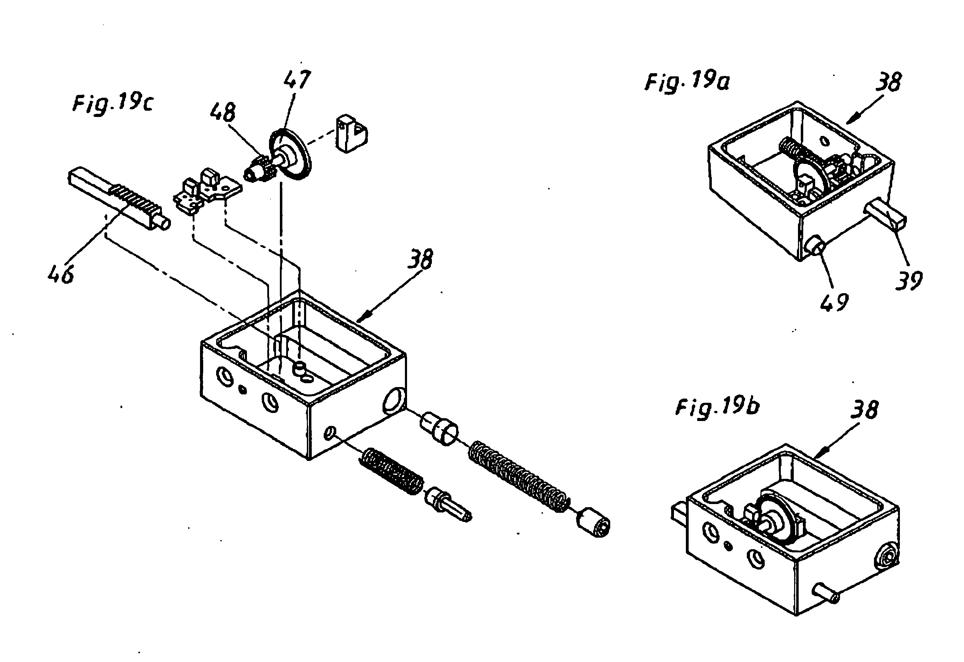

In den Fig. 19a bis 19c ist die in Fig. 18 gezeigte Wegmesseinrichtung 38 im Detail dargestellt. Erkennbar ist, dass der Stößel 39 im hinteren Bereich als Zahnstange 46 ausgebildet ist und ein mit der Scheibe 47 des Encoders 45 verbundenes Ritzel 48 kämmt. Erkennbar ist weiters ein gefederter Anschlag 49, der die Wegmessung bei einem in seiner geschlossenen Endlage befindlichen bewegbaren Möbelteil 2 gestattet, wenn dieses durch einen Benutzer über das verbleibende Spiel zur Auslösung in Richtung des Möbelkorpus 3 gedrückt wird.

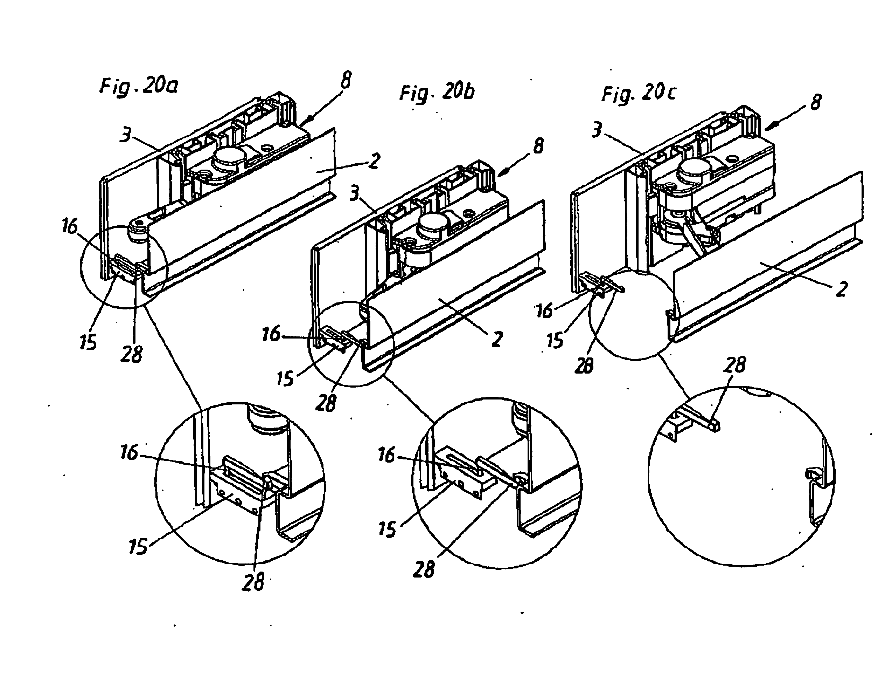

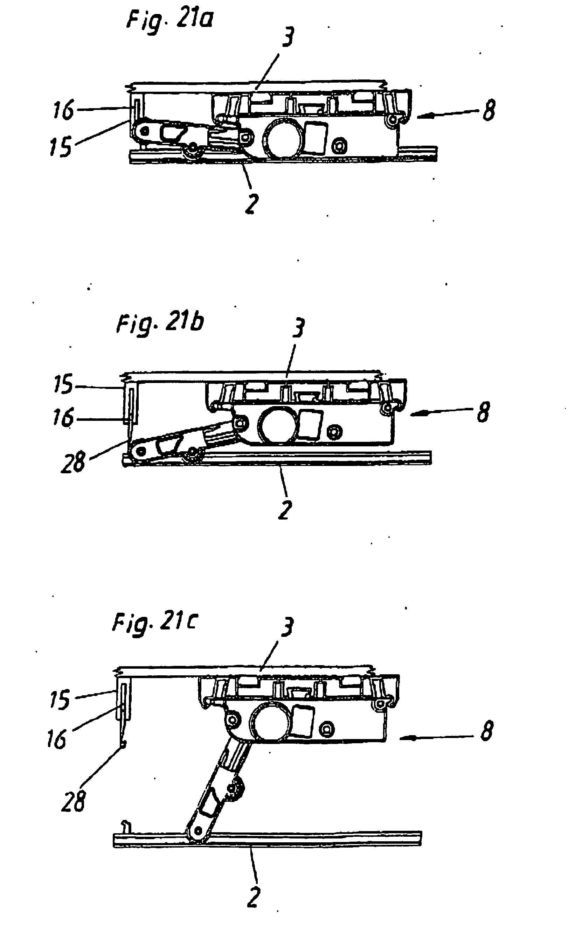

In den Fig. 20a bis 20c ist ein weiteres Ausführungsbeispiel einer erfindungsgemäßen Ausstoßvorrichtung 8 erkennbar, welches sich durch ein am Möbelkorpus 3 angeordnetes Potentiometer 15 auszeichnet. Das Stellglied 16 des Potentiometers 15 ist über einen Mitnehmer 28 mit der Rückseite eines bewegbaren Möbelteils 2 verbunden. Das Herausbewegen des bewegbaren Möbelteils 2 aus seiner geschlossenen Endlage nimmt über die Mitnehmer 28 das Stellglied 16 des Potentiometers 15 mit, worauf das Potentiometer 15 die Ausstoßung des bewegbaren Möbelteils 2 durch die Ausstoßvorrichtung 8 befiehlt. Dieser Vorgang ist in den Fig. 21 a bis 21 c in einer Draufsicht dargestellt.

## Patentansprüche

1. Ausstoßvorrichtung für ein in oder an einem Möbelkorpus bewegbar gelagertes Möbelteil mit einem als Hebel ausgebildeten Ausstoßer zum Ausstoßen des bewegbaren Möbelteils, einer elektrischen Antriebseinheit in Form eines Elektromotors (29) und einem Getriebe zur Kraftübertragung von der Antriebseinheit auf den Ausstoßer, **dadurch gekennzeichnet, dass** das Getriebe (13) eine Rutschkupplung (14) umfasst, die aus einem Federring (41) und Mitnahmenocken (42) besteht, wobei sich der Federring (41) bei übermäßiger Belastung aufweitet und über die Mitnahmenocken (42) gleitet.

2. Möbel mit einem bewegbaren Möbelteil, insbesondere Schublade oder Türe, **gekennzeichnet durch** eine Ausstoßvorrichtung (8) nach Anspruch 1.

3. Möbel nach Anspruch 2, **dadurch gekennzeichnet, dass** am bzw. im Möbel (1) eine Wegmesseinrichtung (38) angeordnet ist und dass die Ausstoßvorrichtung (8) durch die Wegmesseinrichtung (38) auslösbar ist.

4. Möbel nach Anspruch 3, **dadurch gekennzeichnet, dass** die Wegmesseinrichtung (38) an bzw. in der Ausstoßvorrichtung (8) angeordnet ist.

5. Möbel nach Anspruch 3, **dadurch gekennzeichnet, dass** die Wegmesseinrichtung (38) an bzw. im Möbelkorpus (3) angeordnet ist.

6. Möbel nach einem der Ansprüche 3 bis 5, **dadurch gekennzeichnet, dass** die Wegmesseinrichtung (38) einen vom bewegbaren Möbelteil (2) beaufschlagbaren Stößel (39) umfasst.

7. Möbel nach einem der Ansprüche 3 bis 6, **dadurch gekennzeichnet, dass** die Wegmesseinrichtung (38) einen mit dem bewegbaren Möbelteil (2) koppelbaren Mitnehmer (28) aufweist.

8. Möbel nach einem der Ansprüche 3 bis 7, **dadurch gekennzeichnet, dass** die Wegmesseinrichtung (38) einen Encoder (39) umfasst.

9. Möbel nach einem der Ansprüche 3 bis 7, **dadurch gekennzeichnet, dass** die Wegmesseinrichtung (38) ein Potentiometer (15) umfasst.

10. Möbel nach einem der Ansprüche 3 bis 9, **dadurch gekennzeichnet, dass** die Wegmesseinrichtung (38) einen gefederten Anschlag (49) aufweist, der die Wegmessung bei einem in seiner geschlossenen Endlage befindlichen bewegbaren Möbelteil (2) gestattet.

## Claims

1. Ejection device for a furniture component housed movable in or against a furniture body comprising an ejector in the form of a lever for ejecting the movable furniture component, an electric drive unit in the form of an electric motor (29) and a transmission for transmitting force from the drive unit to the ejector, **characterized in that** the transmission (13) comprises a friction clutch (14) which consists of a spring ring (41) and driver cams (42), wherein the spring ring (41) extends upon overload and slips over the driver cams (42).

2. A piece of furniture comprising a movable furniture component, in particular a drawer or a door, **characterized by** an ejection device (8) according to claim 1.

3. A piece of furniture according to claim 2, **characterized in that** a path measuring device (38) is arranged on or in the piece of furniture (1) and **in that** the ejection device (8) can be activated by the path measuring device (38).

4. A piece of furniture according to claim 3, **characterized in that** the path measuring device (38) is arranged on or in the ejection device (8).

5. A piece of furniture according to claim 3, **characterized in that** the path measuring device (38) is arranged on or in the furniture body (3).

6. A piece of furniture according to one of claims 3 to 5, **characterized in that** the path measuring device (38) comprises a rod (39) which can be acted upon by the movable furniture component (2).

7. A piece of furniture according to one of claims 3 to 6, **characterized in that** the path measuring device (38) comprises a driver (28) which can be coupled with the movable furniture component (2).

8. A piece of furniture according to one of claims 3 to 7, **characterized in that** the path measuring device (38) comprises an encoder (39).

9. A piece of furniture according to one of claims 3 to 7, **characterized in that** the path measuring device (38) comprises a potentiometer (15).

10. A piece of furniture according to one of claims 3 to 9, **characterized in that** the path measuring device (38) comprises a resilient abutment (49) which allows the path measurement of a movable furniture component (2) being in its closed end position.

## Revendications

1. Dispositif d'éjection pour une pièce de meuble montée de manière mobile dans ou sur un corps de meuble, avec un éjecteur réalisé comme levier pour éjecter la pièce de meuble mobile, une unité d'entraînement électrique sous la forme d'un moteur électrique (29) et une transmission pour assurer la transmission de force de l'unité d'entraînement à l'éjecteur, **caractérisé en ce que** la transmission (13) comprend un embrayage à friction (14) constitué d'une rondelle-ressort (41) et d'une came d'entraînement (42), la rondelle-ressort (41) s'élargissant en cas de contrainte excessive et glissant sur la came d'entraînement (42).

2. Meuble avec une pièce de meuble mobile, en particulier tiroir ou porte, **caractérisé par** un dispositif d'éjection (8) selon la revendication 1.

3. Meuble selon la revendication 2, **caractérisé en ce qu'**un dispositif de mesure de course de déplacement (38) est disposé sur ou dans le meuble (1), et **en ce que** le dispositif d'éjection (8) peut être déclenché par le dispositif de mesure de course de déplacement (38).

4. Meuble selon la revendication 3, **caractérisé en ce que** le dispositif de mesure de course de déplacement (38) est disposé sur ou dans le dispositif d'éjection (8).

5. Meuble selon la revendication 3, **caractérisé en ce que** le dispositif de mesure de course de déplacement (38) est disposé sur ou dans le corps de meuble (3).

6. Meuble selon l'une des revendications 3 à 5, **caractérisé en ce que** le dispositif de mesure de course de déplacement (38) comprend un poussoir (39) pouvant être sollicité par la pièce de meuble (2) mobile.

7. Meuble selon l'une des revendications 3 à 6, **caractérisé en ce que** le dispositif de mesure de course de déplacement (38) présente un organe d'entraînement (28) pouvant être couplé à la pièce de meuble (2) mobile.

8. Meuble selon l'une des revendications 3 à 7, **caractérisé en ce que** le dispositif de mesure de course de déplacement (38) comprend un codeur (39).

9. Meuble selon l'une des revendications 3 à 7, **caractérisé en ce que** le dispositif de mesure de course de déplacement (38) comprend un potentiomètre (15).

10. Meuble selon l'une des revendications 3 à 9, **caractérisé en ce que** le dispositif de mesure de course de déplacement (38) présente une butée (49) montée sur ressort, permettant la mesure de la course de déplacement dans le cas d'une pièce de meuble (2) mobile se trouvant dans sa position finale de fermeture.
